# EUROPEAN PATENT APPLICATION

(11) **EP 4 821 884 A1**
(43) Date of publication of application: **14.10.2026**
(21) Application number: 24913217.6
(22) Date of filing: 10.07.2024
(51) Int. Cl.: C01B 33/021, C01B 33/029, C01B 33/023

(54) **METHOD AND APPARATUS FOR MANUFACTURING SILICON MICROPARTICLES AND SILICON MICROPARTICLES MANUFACTURED THEREBY**

(30) Priority: 27.12.2023 KR 20230192576
(71) Applicant: OCI Company Ltd., Seoul 04532 (KR)
(72) Inventor: KIM, Gabok, Seongnam-si Gyeonggi-do 13212 (KR); JEONG, Intaek, Seongnam-si Gyeonggi-do 13212 (KR); KANG, Byungchang, Seongnam-si Gyeonggi-do 13212 (KR); PARK, Byunghyun, Seongnam-si Gyeonggi-do 13212 (KR); JEONG, Youngmin, Seongnam-si Gyeonggi-do 13212 (KR); CHI, Eunok, Seongnam-si Gyeonggi-do 13212 (KR)
(74) Representative: Winter, Brandl - Partnerschaft mbB
(86) International application number: PCT/KR2024/009893
(87) International publication number: WO 2025/143403

(57) **Abstract**

The present invention relates to a method and an apparatus for manufacturing silicon microparticles and silicon microparticles manufactured thereby. More specifically, the present invention relates to a method and an apparatus capable of manufacturing silicon particles having a controlled grain size, a spherical shape, and a size of several micrometers (*µ*m), and to silicon microparticles manufactured thereby.

## Description

### [Technical Field]

The present disclosure relates to a method and an apparatus for manufacturing silicon microparticles, and silicon microparticles manufactured thereby. More specifically, the present disclosure relates to a method and an apparatus capable of manufacturing silicon particles having a controlled grain size, a spherical shape, and a size of several micrometers (µm), and to silicon microparticles manufactured thereby.

### [Background Art]

The performance improvement of secondary batteries is based on components of a positive electrode material, a negative electrode material, and an electrolyte.

Among the components, graphite-based materials, which are mainly used as the negative electrode material, have been commercially used due to their excellent electrochemical performance and low cost, but have a limitation in application to high-capacity secondary batteries because a theoretical capacity thereof is limited to 370 mAh/g.

In order to overcome the limitation, non-graphite-based negative electrode materials such as silicon, tin, and germanium have emerged as alternative materials. Among them, silicon is attracting attention as a material to replace graphite because it has a theoretical capacity of 4000 to 4200 mAh/g and exhibits a high capacity of about 10 times or more compared to graphite. However, compared to the high theoretical capacity, a large volume expansion of about 400% occurs during a charging and discharging process, thereby resulting in structural destruction of a material and a low lifespan.

In order to solve such limitations, a method of adjusting a size of silicon particles to be small to a micrometer to nanometer level have been developed. In general, there are methods of manufacturing polysilicon particles or pulverizing silicon materials such as silicon chunks obtained from other industrial fields or treatment processes.

Specifically, as a method for manufacturing polysilicon particles, there are a Siemens process using a bell jar reactor, an FBR process in which manufacturing is performed in a fluidized bed reactor, and the like.

Among them, the Siemens process is a method of depositing silicon on a surface of a rod by reacting a silicon source gas with a silicon rod provided in a reactor, and has limitations in that a continuous process is impossible because a surface area required for deposition of silicon is limited and a diameter of the silicon rod increased by the deposition reaction is limited, and productivity is low because power consumption per unit weight of silicon is large.

The FBR process is a method in which silicon seeds are introduced into a crucible through which hydrogen gas flows, and when a silicon source gas is injected, silicon particles having a diameter of about 1 cm are deposited around the silicon seeds while the silicon seeds fall, and has a problem in that although a silicon production rate is faster than that of the Siemens process, quality of the manufactured silicon is low.

Conventionally, in order to obtain silicon of a micro size from polysilicon particles manufactured as described above, a separate pulverization process is performed, and after pulverization, an additional classification process is also required, so that there is a problem in that the process is complicated and efficiency is lowered. In addition, in the pulverization process, unintended impurities, fine powders, and the like are generated, and it is almost impossible to control sphericity of particles having a micrometer size.

In addition, as described above, the FBR process also has a problem in that an additional purification process is also required because an impurity content is high even in a process in which silicon seeds contact an inner wall of a reactor in a fluidized bed reactor.

As a method for directly manufacturing silicon nanoparticles, a method of manufacturing by irradiating a target silicon metal with a laser beam, a method of manufacturing by thermally decomposing a precursor including silicon in a solvent phase using ultraviolet rays, and a plasma process for manufacturing silicon nanoparticles by generating plasma and decomposing a silicon precursor, and the like are being developed.

Meanwhile, when silicon nanoparticles are used as an active material for a secondary battery, there are disadvantages in that since the silicon particles are too small, dispersibility is lowered when prepared and applied as a negative electrode slurry, and a lifespan and a capacity retention rate of the secondary battery are lowered. On the other hand, when a size of silicon particles becomes too large, there is a problem in that deterioration occurs due to mechanical stress during charging and discharging processes of the secondary battery.

Accordingly, it is required to manufacture silicon particles having a micro size, but with a conventional method for manufacturing silicon nanoparticles, it is difficult to manufacture silicon particles having a micro size, and there is a limitation in controlling sphericity and a grain.

In addition, in the conventional methods for manufacturing silicon nanoparticles, methods such as laser and plasma have a limitation in implementing mass production due to high cost, and thus it is expected that a technique for manufacturing silicon microparticles by methods such as laser and plasma will consequently be difficult to achieve mass production.

As described above, demand for silicon microparticles is increasing in many fields in consideration of dispersibility of silicon particles and activity due to a specific surface area of silicon particles, and thus it is necessary to develop a technology capable of directly and efficiently manufacturing silicon particles having a micro size, and furthermore, it is still required to develop a method for manufacturing silicon microparticles so as to secure grains and sphericity of the silicon microparticles and a manufacturing apparatus for implementing the same.

### [Disclosure]

### [Technical Problem]

An object of the present disclosure is to provide silicon microparticles having a grain size of 40 nm or less, high sphericity, and a particle diameter of several hundred nm to several micrometers (µm).

Another object of the present disclosure is to provide a method for manufacturing silicon microparticles and a manufacturing apparatus for implementing the same, which are suitable for mass production by economically and efficiently manufacturing the silicon microparticles having a grain size of 40 nm or less, high sphericity, and a particle diameter of several hundred nm to several micrometers (µm) without additional processes such as a pulverization process and a classification process.

The objects of the present disclosure are not limited to the above-mentioned objects, and other objects and advantages of the present disclosure that are not mentioned can be understood by the following description, and will be more clearly understood by the embodiments of the present disclosure. In addition, it will be easily understood that the objects and advantages of the present disclosure can be realized by means indicated in the claims and combinations thereof.

### [Technical Solution]

In order to achieve the above object, according to a first aspect of the present disclosure,
there may be provided a method for manufacturing silicon microparticles, the method comprising:
(S1) introducing, into a reactor, a silicon source gas mixture including two or more kinds of silicon source gases having different decomposition temperatures and hydrogen gas; and
(S2) generating silicon microparticles by decomposing the silicon source gas mixture in the reactor,
wherein the generated silicon microparticles have an average grain size of 40 nm or less, an average particle diameter (D₅₀) of 100 nm to 10 µm, and a sphericity of 80% or more.

The silicon source gas mixture may be a mixture of two or more kinds selected from silicon source gases represented by Chemical Formula 1 or Chemical Formula 2 below:

[Chemical Formula 1] SiHₓCl₄₋ₓ

(x is an integer of 0 to 4)

[Chemical Formula 2] Si₂H_{y}Cl_{6-y}

(y is an integer of 0 to 6)

The silicon source gas represented by Chemical Formula 1 or Chemical Formula 2 may be selected from monosilane (SiH₄) gas, dichlorosilane (SiH₂Cl₂) gas, trichlorosilane (SiHCl₃) gas, silicon tetrachloride (SiCl₄) gas, hexachlorodisilane (Si₂Cl₆) gas, and disilane (Si₂H₆) gas.

The silicon source gas mixture includes a first silicon source gas and a second silicon source gas, wherein a decomposition temperature of the first silicon source gas is lower than that of the second silicon source gas.

A decomposition temperature of the first silicon source gas may be 350°C to 600°C, and a decomposition temperature of the second silicon source gas may be 600°C to 1000°C.

The first silicon source gas and the second silicon source gas may be introduced at a molar ratio of 1 : 0.2 to 1 : 6.

The silicon source gas mixture and the hydrogen gas may be introduced at a molar ratio of 1 : 0.5 to 1 : 10.

A temperature of the reactor may be 700°C to 1,000°C, with a temperature gradient such that a temperature at an upper end of the reactor is higher than a temperature at a lower end of the reactor.

In the reactor, generation of silicon seeds and growth of silicon particles from the generated silicon seeds may proceed simultaneously.

In (S2) above, a reaction time in the reactor for the silicon source gas mixture to manufacture silicon microparticles may be 5 minutes to 3 hours.

In the method for manufacturing silicon microparticles, a carrier gas may be further introduced into the reactor.

According to a second aspect of the present disclosure, there may be provided an apparatus for manufacturing silicon microparticles, the apparatus comprising:
a raw material gas injection part;
a raw material gas mixing unit;
a thermal decomposition reactor;
a heating part surrounding the reactor; and
a gas discharge part,
wherein the thermal decomposition reactor has a turbulent flow region formed at an upper portion of the thermal decomposition reactor and a laminar flow region formed at a lower portion of the thermal decomposition reactor coexisting therein.

An internal structure for forming a turbulent flow region and a laminar flow region is included inside the thermal decomposition reactor, wherein a material of the internal structure has heat resistance to 700°C to 1000°C, and may include one or more selected from graphite, quartz, and ceramic.

The apparatus for manufacturing silicon microparticles may be an apparatus for implementing the method for manufacturing silicon microparticles according to the first aspect.

A temperature of the thermal decomposition reactor may be 700°C to 1,000°C, with a temperature gradient such that a temperature at an upper end of the thermal decomposition reactor is higher than a temperature at a lower end of the reactor.

In a volume of the thermal decomposition reactor, a volume of the turbulent flow region : a volume of the laminar flow region may be 1 : 9 to 9 : 1.

The silicon microparticles may have a grain size of 40 nm or less, an average particle diameter (D₅₀) of 100 nm to 10 µm, and a sphericity of 80% or more.

According to a third aspect of the present disclosure, there may be provided silicon microparticles manufactured according to the method for manufacturing silicon microparticles according to the first aspect of the present disclosure.

The silicon microparticles may have an average grain size of 40 nm or less, an average particle diameter (D₅₀) of 100 nm to 10 µm, and a sphericity of 80% or more.

### [Advantageous Effects]

According to the present disclosure, silicon microparticles having a grain size of 40 nm or less and a sphericity of 80% or more can be provided.

The method for manufacturing silicon microparticles according to the present disclosure can manufacture silicon microparticles while directly controlling a grain size and sphericity without processes such as pulverization and classification after manufacturing polysilicon particles.

The method for manufacturing silicon microparticles according to the present disclosure does not require introduction of a silicon rod or seeds, and can simultaneously perform generation of silicon seeds and growth of silicon particles in one reactor to directly manufacture silicon microparticles, thereby having advantages of high economic efficiency, high process efficiency, and suitability for mass production.

In addition to the above-described effects, the specific effects of the present disclosure will be described together with the specific matters for implementing the disclosure below.

### [Brief Description of Drawings]

FIG. 1 is a flowchart schematically illustrating a method for manufacturing silicon microparticles according to an embodiment of the present disclosure.
FIG. 2 is a cross-sectional view schematically showing an apparatus for manufacturing silicon microparticles according to an embodiment of the present disclosure.
FIG. 3 schematically shows a thermal decomposition reactor of an apparatus for manufacturing silicon microparticles according to an embodiment of the present disclosure.
FIG. 4 shows a simulation visualizing a gas residence time distribution inside a thermal decomposition reactor of an apparatus for manufacturing silicon microparticles according to an embodiment of the present disclosure.
FIG. 5 shows a simulation visualizing a gas flow velocity distribution inside a thermal decomposition reactor of an apparatus for manufacturing silicon microparticles according to an embodiment of the present disclosure.

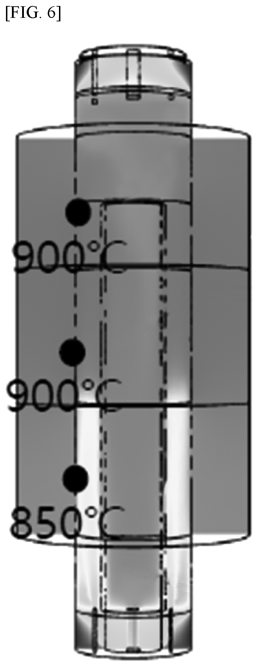

FIG. 6 visualizes a temperature gradient of an upper end and a lower end of a reactor adjusted according to Example 1 of the present disclosure.
FIG. 7 shows an SEM image of microparticles manufactured according to Example 1 of the present disclosure.
FIG. 8 shows an SEM image of microparticles manufactured according to Example 2 of the present disclosure.
FIG. 9 shows an SEM image of microparticles manufactured according to Example 3 of the present disclosure.
FIG. 10 shows an SEM image of microparticles manufactured according to Example 4 of the present disclosure.
FIG. 11 shows an SEM image of microparticles manufactured according to Example 5 of the present disclosure.

### [Best Modes of the Invention]

The advantages and features of the present disclosure, and methods for achieving them will become clear with reference to embodiments described in detail below along with the accompanying drawings. However, the present disclosure is not limited to the embodiments described below and may be implemented in various different forms. These embodiments are provided only to make the disclosure of the present disclosure complete and to fully inform those skilled in the art of the scope of the disclosure. The present disclosure is defined only by the scope of the claims. Like reference numerals refer to like elements throughout the specification.

In the present specification, descriptions that are not set forth herein but can be sufficiently and technically inferred by a person skilled in the art to which the present disclosure pertains will be omitted.

In the present specification, although the terms 'first', 'second', etc. are used to describe various components, these components are not limited by these terms. These terms are only used to distinguish one component from another, and a first component may also be a second component unless otherwise specifically stated.

In the present specification, unless otherwise specifically stated, each component may be singular or plural.

In the present specification, when any component is disposed "on (or under)" a component or "above (or below)" a component, this may mean not only that any component is disposed in contact with the upper surface (or lower surface) of said component, but also that other components may be interposed between said component and any component disposed on (or under) said component.

In the present specification, when it is described that a component is "connected", "coupled" or "joined" to another component, it should be understood that the components may be directly connected or joined to each other, but that other components may be "interposed" between the respective components, or that the respective components may be "connected", "coupled" or "joined" through another component.

As used herein, singular expressions include plural expressions unless the context clearly implies otherwise. As used herein, terms such as "including", "comprising", and "composed of" should not be construed to necessarily include all of the various components or various steps described in the specification, and should be construed to mean that some of the components or some of the steps may not be included, or that additional components or steps may be further included.

In the present specification, the expression "A and/or B" refers to A, B, or A and B, unless otherwise specifically stated, and the expression "C to D" or "C~D" means C or more and D or less, unless otherwise specifically stated.

In the present specification, when a ratio of a first component and a second component is described as a : b to c : d, it means "first component : second component = a : b" to "first component : second component = c : d."

In the present specification, "average grain size" is measured using XRD (Empyrean XRD, Panalytical).

In the present specification, "average particle diameter (D₅₀)" is measured by a laser diffraction method using a laser diffraction particle size analyzer (LS13 320, Beckman Coulter).

In the present specification, "sphericity" is a value obtained by designating a horizontal axis and a vertical axis so as to intersect at 90° at a center of a silicon particle and converting a length of the vertical axis relative to a length of the horizontal axis within the particle into a percentage.

In the present specification, "microparticles" means that an average particle diameter (D₅₀) is 100 nm to 10 µm, which may include an error range.

In the present specification, unless otherwise explicitly stated, "reactor" may be construed to mean a "thermal decomposition reactor."

Hereinafter, the present disclosure will be described in detail.

### Method for Manufacturing Silicon Microparticles

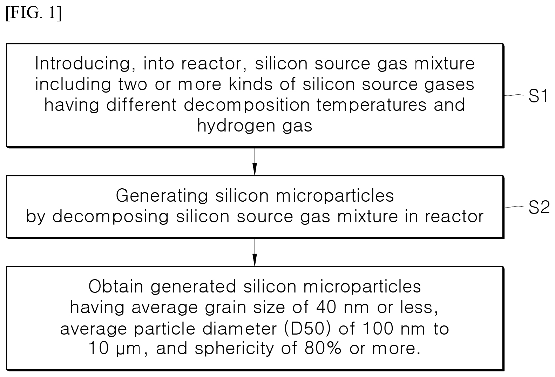

A method for manufacturing silicon microparticles according to the present disclosure will be described with reference to FIG. 1.

The method for manufacturing silicon microparticles according to the present disclosure is for manufacturing microparticles having an average grain size of 40 nm or less, an average particle diameter (D₅₀) of 100 nm to 10 µm, and a sphericity of 80% or more, and includes:
(S1) introducing, into a reactor, a silicon source gas mixture including two or more kinds of silicon source gases having different decomposition temperatures and hydrogen gas; and
(S2) generating silicon microparticles by decomposing the silicon source gas mixture in the reactor.

The silicon source gas mixture is a gas serving as a raw material for manufacturing silicon particles, and according to an embodiment of the present disclosure, may be a mixture of two or more kinds selected from silicon source gases represented by Chemical Formula 1 or Chemical Formula 2 below:

[Chemical Formula 1] SiHₓCl₄₋ₓ

(x is an integer of 0 to 4)

[Chemical Formula 2] Si₂H_{y}Cl_{6-y}

(y is an integer of 0 to 6)

According to an embodiment of the present disclosure, the silicon source gas represented by Chemical Formula 1 or Chemical Formula 2 may be selected from monosilane (SiH₄) gas, dichlorosilane (SiH₂Cl₂) gas, trichlorosilane (SiHCl₃) gas, silicon tetrachloride (SiCl₄) gas, hexachlorodisilane (Si₂Cl₆) gas, and disilane (Si₂H₆) gas, but is not limited thereto.

The silicon source gas mixture of the present disclosure includes a first silicon source gas and a second silicon source gas, wherein the first silicon source gas and the second silicon source gas may be selected from silicon source gases represented by Chemical Formula 1 or Chemical Formula 2.

According to an embodiment of the present disclosure, a decomposition temperature of the first silicon source gas is lower than a decomposition temperature of the second silicon source gas, wherein the decomposition temperature of the first silicon source gas may be 350°C to 600°C, and the second silicon source gas may have a decomposition temperature of 600°C to 1,000°C. Here, the decomposition temperatures of the first silicon source gas and the second silicon source gas are not identical. As a specific example, the first silicon source gas may be dichlorosilane (SiH₂Cl₂) gas, and the second silicon source gas may be trichlorosilane (SiHCl₃) gas.

As in the present disclosure, when the silicon source gas mixture having different decomposition temperatures is used in the method for manufacturing silicon microparticles, the silicon source gas having a lower decomposition temperature first forms silicon seed particles, and at the same time or continuously the formed seed particles are grown to manufacture silicon microparticles. Specifically, since the decomposition temperature of the first silicon source gas is lower than that of the second silicon source gas, the first silicon source gas may be first thermally decomposed to form seed particles in the reactor. At the same time, the second silicon source gas is thermally decomposed and deposited on the formed seed particles, so that silicon microparticles can be manufactured in one reactor.

As described above, the method for manufacturing silicon microparticles according to the present disclosure does not require separately introducing a silicon rod or silicon seed particles, does not require a process of contacting the reactor during production, so that a content of metal impurities is low and purity is high, and can efficiently manufacture silicon particles having a micro size without a separate pulverization process or a classification process for particle size.

The first silicon source gas and the second silicon source gas introduced into the reactor may be introduced, for example, at a molar ratio of 1 : 0.2 to 1 : 6, and for example, at a molar ratio of 1 : 0.5 to 1 : 4. The introduction ratio of the first silicon source gas and the second silicon source gas may be specified to adjust a formation rate of seed particles and growth of particles. For example, when the ratio of the first silicon source gas is less than the above range, formation of the silicon seed particles may not be smoothly achieved, and when the ratio of the first silicon source gas exceeds the above range, only a large amount of particles having a small size that are not sufficiently grown may be formed, thereby causing a problem in that silicon particles having a desired size cannot be formed.

In the method for manufacturing silicon microparticles according to the present disclosure, hydrogen (H₂) gas, which is a growth reaction gas, is introduced together with the silicon source gas mixture. The introduced hydrogen gas allows silicon particles to grow by undergoing a reduction reaction with the silicon source gas mixture.

The silicon source gas mixture and the hydrogen gas introduced into the reactor may be introduced, for example, at a molar ratio of 1 : 0.5 to 1 : 10, for example, at a molar ratio of 1 : 1 to 1 : 5, and for example, at a molar ratio of 1 : 2 to 1 : 3. When the ratio of the hydrogen gas is less than the above range, a growth reaction may not occur smoothly, and when the ratio of the hydrogen gas exceeds the above range, since an amount of the silicon source gas mixture is relatively reduced, there is a limitation in manufacturing silicon particles in a desired amount.

The method for manufacturing silicon microparticles according to the present disclosure includes (S2) generating silicon microparticles by decomposing the silicon source gas mixture in the thermal decomposition reactor. In one reactor, the silicon source gas mixture may be decomposed to generate silicon seed particles and simultaneously grow to manufacture silicon microparticles.

Specifically, in the silicon source gas mixture introduced into the reactor, the first silicon source gas having a lower decomposition temperature is first thermally decomposed to form seed particles, and at the same time, the second silicon source gas is thermally decomposed and deposited on the formed seed particles, so that silicon microparticles can be manufactured using a chemical vapor synthesis (CVS) method.

Accordingly, silicon microparticles can be manufactured at a faster rate, and separate pulverization and classification processes are not required, so that high-purity silicon microparticles can be manufactured.

In the present disclosure, when the silicon source gas mixture is decomposed to manufacture silicon microparticles, an internal temperature of the reactor may be 700°C to 1,000°C and may have a temperature gradient such that a temperature at an upper end of the reactor is higher than a temperature at a lower end of the reactor, and details on the reactor will be described below in the apparatus for manufacturing silicon microparticles.

An internal pressure of the reactor may be 1 bar to 10 bar. In the reaction step, it may be desirable that the reactor has a temperature and pressure within the above ranges in view of a thermal decomposition rate of the silicon source gas mixture, adjustment of a size of silicon particles, and improvement of a reaction yield. Since the internal temperature of the reactor should cause thermal decomposition, it is preferable that the internal temperature is equal to or slightly higher than a thermal decomposition temperature of the second silicon source gas having a higher decomposition temperature, and the pressure may be adjusted according to process conditions. The reactor may be heated to the above temperature by a heating unit.

According to an embodiment of the present disclosure, a time for the silicon source gas mixture to manufacture silicon microparticles in the reactor may be about 5 minutes to 3 hours, but this may be appropriately adjusted depending on a size of the reactor, an amount of raw material gas introduced, and a desired production amount. However, when the reaction time of the silicon source gas mixture is too short, there may be a problem in that there is insufficient time for formation of seed particles and growth of particles, and when the reaction time of the silicon source gas mixture is too long, there may be a problem in that a size of silicon particles deviates from a desired range, and grains of the silicon particles are overgrown, resulting in an excessively large grain size.

According to an embodiment of the present disclosure, the method for manufacturing silicon microparticles may further include recovering the manufactured silicon microparticles, and may further include cooling before the recovering.

According to an embodiment of the present disclosure, a carrier gas may be further introduced into the reactor, and for example, the carrier gas may be argon (Ar) gas or nitrogen (N₂) gas. The carrier gas may be introduced to maintain a flow rate of gas introduced from a lower portion of the reactor. Since the reactor according to the present disclosure has a structure in which gas is introduced from a lower end, the carrier gas may be used to easily adjust a flow rate of the gas.

According to another aspect of the present disclosure, there are provided silicon microparticles manufactured according to the method for manufacturing silicon microparticles. The silicon microparticles manufactured as described above may be used as a raw material for silicon nitride, a material for a solar cell, a negative electrode material for a secondary battery, and the like.

Specifically, the silicon particles manufactured according to the present disclosure may have an average particle diameter (D₅₀) of, for example, 100 nm to 10 µm, for example, 1 µm to 5 µm, and for example, 1.5 µm to 3 µm. Accordingly, a separate pulverization process is not required, and since there is no pulverization process, generation of fine powders does not occur, and a classification (sieving) process is also not required, so that a content of metal impurities is significantly low. When the silicon microparticles of the present disclosure having the particle size distribution within the above range are used as a negative electrode material for a secondary battery, they can contribute to improvement of a lifespan and a capacity retention rate of the secondary battery.

In addition, the silicon microparticles manufactured according to the present disclosure may have smaller grains than those of the conventional art. As a size of grains of silicon particles increases, when used as a negative electrode material for a secondary battery, lifespan characteristics of the secondary battery are deteriorated, and a grain size of conventionally used silicon particles is approximately at a level of 100 nm. Accordingly, according to an embodiment of the present disclosure, the silicon microparticles may have an average grain size of 40 nm or less, and by adjusting process conditions, for example, those having an average grain size of 30 nm or less, and for example, those having an average grain size of 25 nm or less may also be manufactured. As the grain size becomes smaller as described above, particle breakage due to volume change occurring during charging and discharging of the secondary battery can be reduced, thereby contributing to improvement of the lifespan of the secondary battery.

In addition, unlike microparticles obtained by conventional pulverization, the silicon microparticles manufactured according to the present disclosure do not undergo a pulverization process and thus can exhibit very high sphericity. When non-spherical silicon particles are used as a negative electrode material for a secondary battery, dispersibility is lowered and a probability of occurrence of side reactions during charging and discharging processes of the secondary battery is increased, thereby resulting in a problem of deteriorating performance of the secondary battery. Accordingly, when used as a negative electrode material for a secondary battery, the spherical silicon microparticles according to the present disclosure can contribute to improvement of performance of the secondary battery. According to an embodiment of the present disclosure, the silicon microparticles may have, for example, a sphericity of 80% or more, for example, 90% or more, for example, 95% or more, and for example, 99% or more.

### Apparatus for Manufacturing Silicon Microparticles

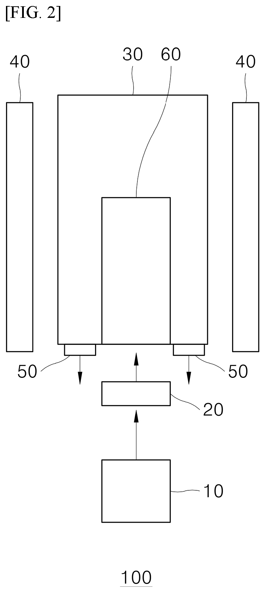

Referring to FIG. 2, there may be provided an apparatus for manufacturing silicon microparticles for implementing the method for manufacturing silicon microparticles according to the present disclosure.

The apparatus for manufacturing silicon microparticles 100 includes: a raw material gas injection part 10; a raw material gas mixing unit 20; a thermal decomposition reactor 30; a heating part 40 surrounding the reactor; and a gas discharge part 50. The thermal decomposition reactor 30 is characterized in that a turbulent flow region and a laminar flow region are simultaneously formed during reaction by including an internal structure 60.

As the thermal decomposition reactor 30, any reactor capable of implementing chemical vapor synthesis (CVS) may be used without limitation.

The thermal decomposition reactor 30 may be a reactor used in the method for manufacturing silicon microparticles of the present disclosure.

For example, the thermal decomposition reactor 30 may be selected from a chemical vapor deposition reactor, a chemical vapor condensation reactor, and a fluidized-bed reactor, and preferably, a chemical vapor deposition reactor is used.

The internal structure 60 has a structure in which both an upper portion and a lower portion are open, and may have a cylindrical structure, a cubic structure, or the like depending on a structure of the thermal decomposition reactor 30, and may have the same shape as that of the thermal decomposition reactor 30, but is not necessarily limited thereto.

The heating part 40 surrounding the thermal decomposition reactor 30 is not particularly limited as long as it is a heating part applied in the present technical field, and is required to be capable of heating to a temperature of 700°C to 1000°C required in the present disclosure. For example, it may operate in a manner in which a heating wire is inserted into a wall of the thermal decomposition reactor 30 and heated by applying power, or in a manner in which heating is performed by providing a tube-type furnace formed around the thermal decomposition reactor 30.

In addition, as will be described later, since temperatures of a lower portion 30a and an upper portion 30b of the thermal decomposition reactor 30 are different, it is preferable that the heating part 40 is designed to adjust the temperatures of the lower portion 30a and the upper portion 30b differently as described above.

Although not shown in FIG. 2, a bag filter for collecting the finally generated silicon microparticles, various pressure and temperature controllers, valves, and the like may be included.

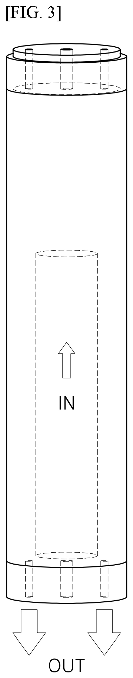

Referring to FIG. 3, reaction gases are respectively supplied to the raw material gas injection part 10, and the supplied reaction gases (raw material gases) are mixed in the raw material gas mixing unit 20, and are then introduced into the thermal decomposition reactor 30 through the internal structure 60.

An arrow indicated as "IN" in FIG. 3 represents an injection direction in which the raw material gas moves from the raw material gas injection part 10 to the internal structure 60 together with the thermal decomposition reactor 30. The raw material gas introduced through the internal structure 60 passes through an upper portion of the internal structure 60 and is diffusively introduced into the thermal decomposition reactor 30.

An arrow indicated as "OUT" in FIG. 3 represents a direction in which gas is discharged to the gas discharge part 50 after the reaction proceeds in the thermal decomposition reactor 30 including the internal structure 60.

Although not specifically shown in the drawings, according to an embodiment of the present disclosure, it is also possible to design such that an injection direction in which the raw material gas moves and a direction in which the gas is discharged in FIG. 3 are reversed. With reference to FIG. 3, this means that the apparatus may be designed such that the raw material gas is supplied at a position of the gas discharge part 50, and the gas is discharged at a position of the raw material gas injection part 10. This may be achieved by changing a flow of gas inside and outside the reactor.

According to a preferred embodiment of the present disclosure, as shown in FIG. 3, one lower raw material gas injection part 10 is provided at a center side of the internal structure 60, and two gas discharge parts 50 are provided at an outer side of the thermal decomposition reactor 30 not occupied by the internal structure 60.

The thermal decomposition reactor 30 is characterized in that a turbulent flow region is formed at an upper portion thereof, and a laminar flow region is formed at a lower portion thereof.

In addition, the thermal decomposition reactor 30 is characterized in that temperatures of the upper portion and the lower portion are adjusted differently.

Specifically, a region from the raw material gas injection part 10 to approximately one-third of the height of the thermal decomposition reactor 30 is defined as a lower portion 30a, and a region above that point up to a top end of the reactor is distinctively defined as an upper portion 30b, whereby a temperature of the upper portion 30b is set to be about 50 to 100°C higher than a temperature of the lower portion 30a.

According to an embodiment of the present disclosure, a temperature of the lower portion 30a of the thermal decomposition reactor may be about 700°C to 1000°C, and may be 800°C to 900°C. Accordingly, a temperature of the upper portion 30b of the thermal decomposition reactor may be heated to a temperature higher by 50°C to 100°C.

As a result, in the lower portion 30a of the thermal decomposition reactor, which is set to have a relatively lower temperature, a silicon source gas having a relatively lower decomposition temperature mainly undergoes a reaction for generating silicon seeds.

In addition, in the upper portion 30b of the thermal decomposition reactor, which is set to have a relatively higher temperature, particles grow on the silicon seeds generated in the lower portion 30a by a chemical deposition reaction of a silicon source having a relatively higher decomposition temperature, thereby forming silicon particles at a micro level.

Importantly, as will be described in detail below, by allowing a laminar flow region to be predominantly formed in the lower portion 30a of the thermal decomposition reactor and a turbulent flow region to be predominantly formed in the upper portion 30b, a seed generation reaction can mainly proceed in the lower portion 30a and a chemical deposition reaction can mainly proceed in the upper portion 30b as intended in the present disclosure, thereby exhibiting high efficiency and controllability in manufacturing silicon microparticles.

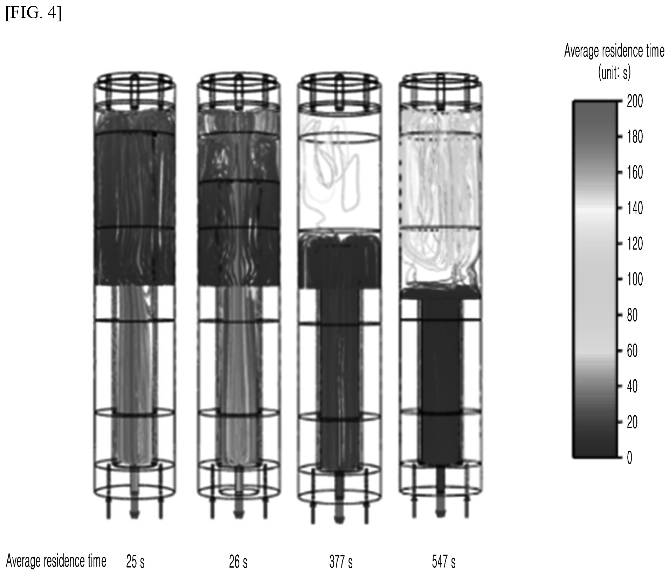

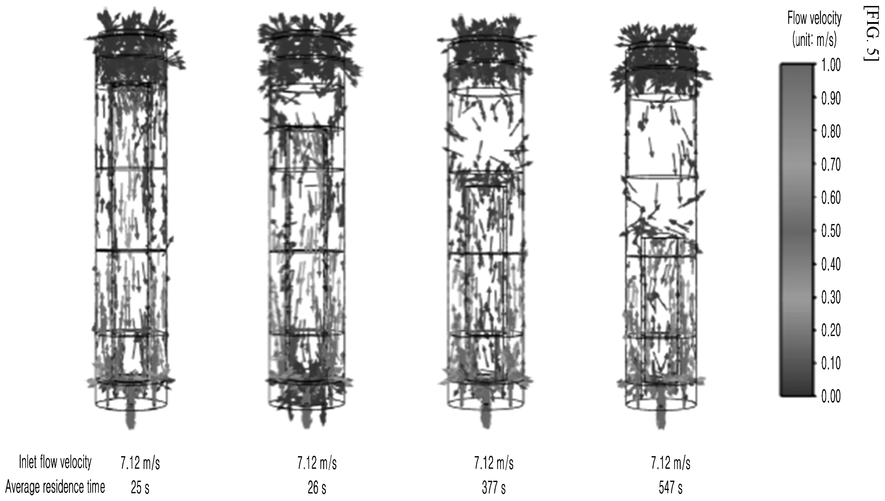

The turbulent flow region and the laminar flow region will be described in detail with reference to FIGS. 4 and 5.

FIG. 4 is a simulation diagram visualizing a flow stream of gas at an upper portion of the reactor with lines, which is illustrated by distinguishing with a color spectrum according to a gas residence time (particle residence time, Particle RT).

Since blue indicates a residence time of 0, it means that the closer to blue, the shorter the residence time of gas particles. A short residence time of gas particles means a linear flow and rapid discharge from the reactor, thereby indicating that laminar flow is developed.

Conversely, as the color approaches red, it indicates that the residence time becomes longer. A long residence time of gas particles means that reaction gas introduced from a lower end of the reactor exists in a mixed state at an upper end of the reactor, thereby indicating that turbulent flow is developed.

Moving from FIG. 4a to FIG. 4d, although a horizontal cross-sectional diameter of the internal structure 60 is the same, a height of the internal structure 60 relative to a height of the thermal decomposition reactor 30 becomes gradually smaller. That is, an occupancy ratio of a turbulent flow region in which flow is not developed in an upper portion of the reactor can be adjusted depending on the height of the internal structure.

That is, FIG. 4 shows that the height of the internal structure 60 is set as a factor for adjusting volumes of the turbulent flow region and the laminar flow region formed according to the residence time of gas particles, and a volume of the turbulent flow region in which flow is not developed in the upper portion of the reactor can be adjusted by differently designing the height of the internal structure 60 relative to the height of the thermal decomposition reactor 30.

Since the laminar flow region is suitable for seed formation and the turbulent flow region is suitable for particle growth, an optimal combination of volumes of the laminar flow region and the turbulent flow region can be derived by adjusting factors such as the height of the internal structure 60.

FIG. 5 is a simulation diagram visualizing a gas flow velocity (vector value) in an upper portion of the reactor by directions and lengths of arrows, which is illustrated by distinguishing with a color spectrum according to the gas flow velocity. The closer to blue, the slower the flow velocity, and the closer to red, the faster the flow velocity.

Interpretation of FIG. 5 is the same as that of FIG. 4 described above. That is, the more or shorter the blue arrows are, the more it indicates a laminar flow region in which a residence time of gas particles in the corresponding region is short, and the more or longer the arrows approaching red are, the more it indicates a turbulent flow region in which flow in the corresponding region is not active, so that a residence time of gas particles is long and there are many mixings with each other.

FIGS. 5a to 5d are simulations for the same reactor as in FIGS. 4a to 4d, and it can likewise be confirmed from flow velocity analysis that an occupancy ratio of a turbulent flow region in which flow is not developed in an upper portion of the reactor can be adjusted depending on the height of the internal structure.As described above, by adjusting a design of the internal structure 60, a volume and a residence time of the turbulent flow region formed in an upper portion 30b of the thermal decomposition reactor can be adjusted, and consequently, a size and growth of silicon particles to be finally manufactured can be controlled.

According to an embodiment of the present disclosure, in a volume of the thermal decomposition reactor, a volume of the turbulent flow region : a volume of the laminar flow region may be, for example, 1 : 9 to 9 : 1, for example, 2 : 8 to 8 : 2, for example, 3 : 7 to 7 : 3, for example, 4 : 6 to 6 : 4, and for example, 5 : 5.

According to an embodiment of the present disclosure, a material of the internal structure 60 has heat resistance to 700 to 1000°C, and may include one or more selected from graphite, quartz, and ceramic. By adjusting a ratio of a diameter of the thermal decomposition reactor 30 and a diameter of the internal structure 60, and a ratio of a height of the reactor to a height of the internal structure, and the like, the turbulent flow region and the laminar flow region may be designed to have a desired volume ratio, and a method therefor is not particularly limited.

### [Modes for Carrying Out the Invention]

Hereinafter, the present disclosure will be described in more detail by way of Examples. However, the following Examples are merely illustrative of the present disclosure, and the content of the present disclosure is not limited thereto.

### Example 1

A reactor was pressurized to a pressure of 0.5 bar, and heated such that a temperature at a lower end of the reactor was 800°C and a temperature at an upper end of the reactor was 900°C.

Thereafter, monosilane (SiH₄, having a decomposition temperature of about 600°C) as a first silicon source gas, trichlorosilane (SiHCl₃, having a decomposition temperature of about 800°C) as a second silicon source gas, and hydrogen gas were mixed at a molar ratio of 0.5 : 1 : 3, so that all of the first silicon source gas, the second silicon source gas, and the hydrogen gas were introduced into the reactor. Based on an introduction rate, an introduction rate of trichlorosilane was 2056 sccm.

Then, a reaction was carried out in the reactor for about 60 minutes to proceed a thermal decomposition reaction, thereby manufacturing silicon particles having a micro size. The manufactured silicon particles were cooled and recovered.

### Example 2

Pressurization and heating were performed in the same manner as in Example 1, except that the temperature conditions of the reactor were changed as described in Table 1 below. Thereafter, monosilane (SiH₄, having a decomposition temperature of about 600°C) as a first silicon source gas, trichlorosilane (SiHCl₃, having a decomposition temperature of about 800°C) as a second silicon source gas, and hydrogen gas were mixed at a molar ratio of 0.5 : 1 : 1.6, so that all of the first silicon source gas, the second silicon source gas, and the hydrogen gas were introduced into the reactor. Based on an introduction rate, an introduction rate of trichlorosilane was 4134 sccm.

Then, a reaction was carried out in the reactor for about 45 minutes to proceed a thermal decomposition reaction, thereby manufacturing silicon particles having a micro size. The manufactured silicon particles were cooled and recovered.

### Example 3

Pressurization and heating were performed in the same manner as in Example 1, except that the temperature conditions of the reactor were changed as described in Table 1 below. Thereafter, monosilane (SiH₄, having a decomposition temperature of about 600°C) as a first silicon source gas, trichlorosilane (SiHCl₃, having a decomposition temperature of about 800°C) as a second silicon source gas, and hydrogen gas were mixed at a molar ratio of 0.5 : 1 : 3, so that all of the first silicon source gas, the second silicon source gas, and the hydrogen gas were introduced into the reactor. Based on an introduction rate, an introduction rate of trichlorosilane was 4961 sccm.

Then, a reaction was carried out in the reactor for about 35 minutes to proceed a thermal decomposition reaction, thereby manufacturing silicon particles having a micro size. The manufactured silicon particles were cooled and recovered.

### Example 4

Pressurization and heating were performed in the same manner as in Example 1, except that the temperature conditions of the reactor were changed as described in Table 1 below. Thereafter, monosilane (SiH₄, having a decomposition temperature of about 600°C) as a first silicon source gas, trichlorosilane (SiHCl₃, having a decomposition temperature of about 800°C) as a second silicon source gas, and hydrogen gas were mixed at a molar ratio of 0.5 : 1 : 3, so that all of the first silicon source gas, the second silicon source gas, and the hydrogen gas were introduced into the reactor. Based on an introduction rate, an introduction rate of trichlorosilane was 2756 sccm.

Then, a reaction was carried out in the reactor for about 60 minutes to proceed a thermal decomposition reaction, thereby manufacturing silicon particles having a micro size. The manufactured silicon particles were cooled and recovered.

### Example 5

Pressurization and heating were performed in the same manner as in Example 1, except that the temperature conditions of the reactor were changed as described in Table 1 below. Thereafter, monosilane (SiH₄, having a decomposition temperature of about 600°C) as a first silicon source gas, trichlorosilane (SiHCl₃, having a decomposition temperature of about 800°C) as a second silicon source gas, and hydrogen gas were mixed at a molar ratio of 0.5 : 1 : 3, so that all of the first silicon source gas, the second silicon source gas, and the hydrogen gas were introduced into the reactor. Based on an introduction rate, an introduction rate of trichlorosilane was 3859 sccm.

Then, a reaction was carried out in the reactor for about 60 minutes to proceed a thermal decomposition reaction, thereby manufacturing silicon particles having a micro size. The manufactured silicon particles were cooled and recovered.

### Experimental Example

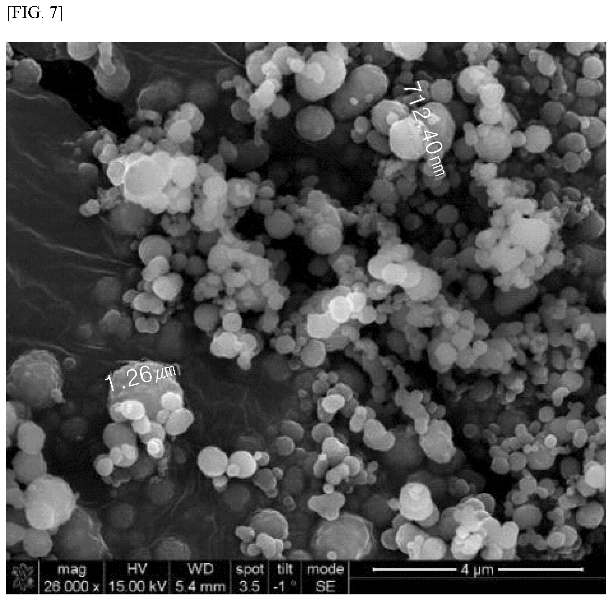

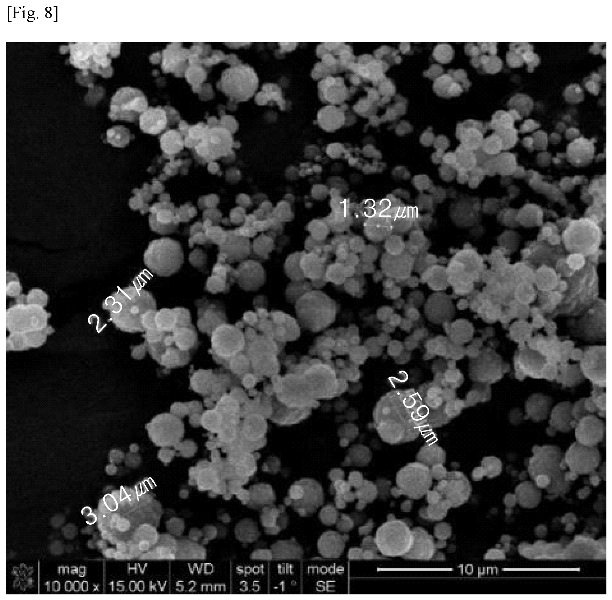

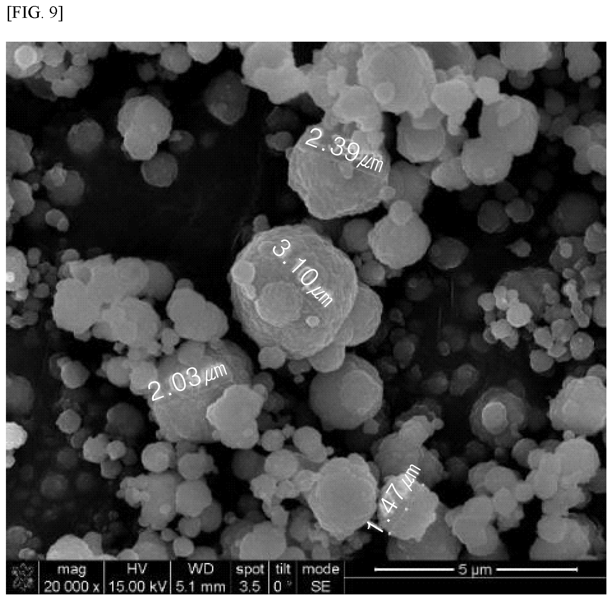

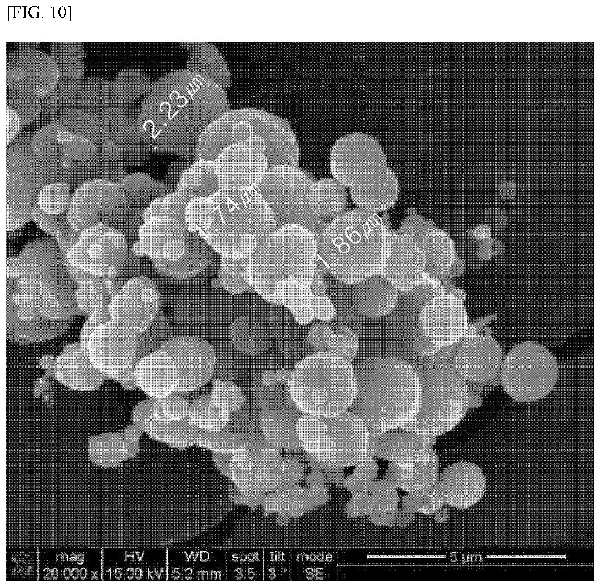

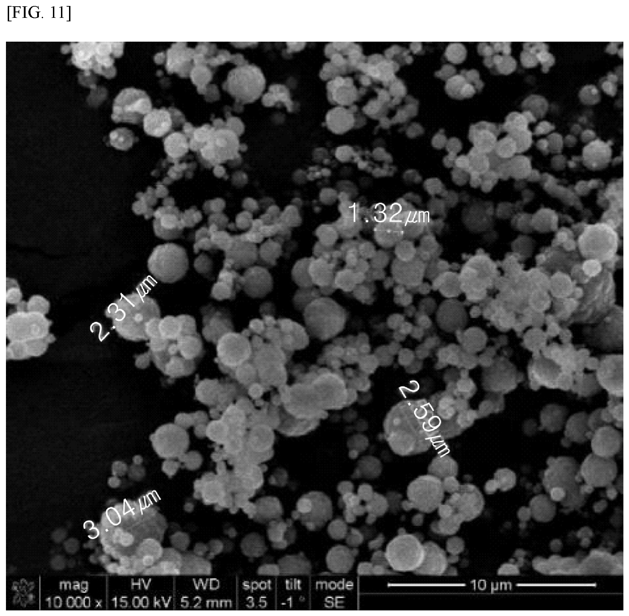

SEM images of the silicon particles manufactured in Examples 1 to 5 are shown in FIGS. 7 to 11, respectively.

The D₅₀ was measured using a laser diffraction particle size analyzer (LS13 320, Beckman Coulter).

The average grain size of the silicon particles was measured by X-ray diffraction analysis using XRD (Empyrean XRD, Panalytical).

By analyzing the SEM images of FIGS. 7 to 11, 20 particles were randomly selected and measured for the sphericity, and the average value was calculated to determine the sphericity value.

The process conditions of Examples 1 to 5 and the measured D₅₀, average grain size, and sphericity are shown in Table 1 below.

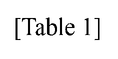

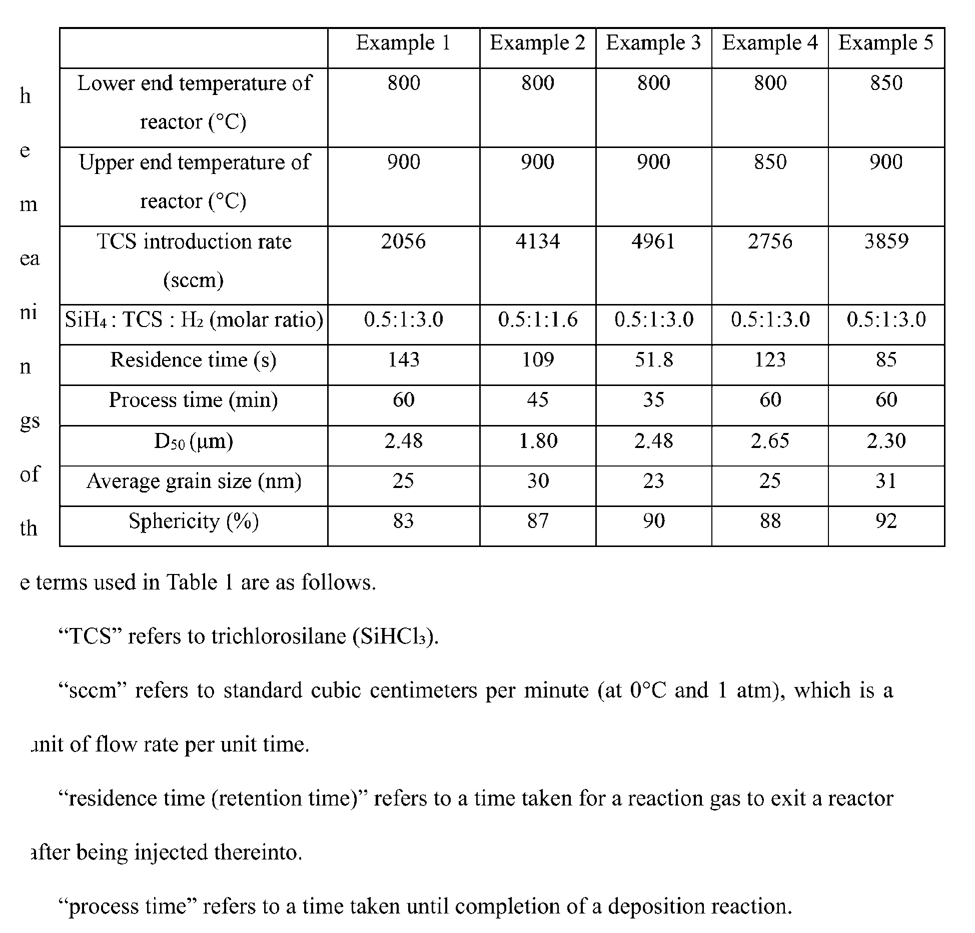

As can be confirmed from Table 1, the silicon particles manufactured according to the present disclosure could achieve a desired micro-level particle size (D₅₀) and grain size, and exhibited very high sphericity. In addition, the manufacturing method of the present disclosure exhibited excellent processability in that the silicon particles can be efficiently manufactured by a chemical vapor synthesis (CVS) method without a separate pulverization process and the like.

Although the present disclosure has been described in more detail with reference to the embodiments and drawings, the present disclosure is not necessarily limited thereto, and may be modified and implemented in various ways without departing from the technical spirit of the present disclosure. Accordingly, the embodiments disclosed herein are not intended to limit but to explain the technical idea of the present disclosure, and the scope of the technical idea of the present disclosure is not limited by these embodiments. Therefore, it should be understood that the embodiments described above are illustrative in all respects and not restrictive. The scope of protection of the present disclosure should be interpreted by the claims below, and all technical ideas within the equivalent scope should be construed as being included in the scope of rights of the present disclosure.

## Claims

1. A method for manufacturing silicon microparticles, the method comprising:
(S1) introducing, into a reactor, a silicon source gas mixture including two or more kinds of silicon source gases having different decomposition temperatures and hydrogen gas; and
(S2) generating silicon microparticles by decomposing the silicon source gas mixture in the reactor,
wherein the generated silicon microparticles have an average grain size of 40 nm or less, an average particle diameter (D₅₀) of 100 nm to 10 µm, and a sphericity of 80% or more.

2. The method of claim 1, wherein the silicon source gas mixture is a mixture of two or more kinds selected from silicon source gases represented by Chemical Formula 1 or Chemical Formula 2 below:
[Chemical Formula 1] SiHₓCl₄₋ₓ
(x is an integer of 0 to 4)
[Chemical Formula 2] Si₂H_{y}Cl_{6-y}
(y is an integer of 0 to 6).

3. The method of claim 2, wherein the silicon source gas represented by Chemical Formula 1 or Chemical Formula 2 is selected from monosilane (SiH₄) gas, dichlorosilane (SiH₂Cl₂) gas, trichlorosilane (SiHCl₃) gas, silicon tetrachloride (SiCl₄) gas, hexachlorodisilane (Si₂Cl₆) gas, and disilane (Si₂H₆) gas.

4. The method of claim 1, wherein the silicon source gas mixture includes a first silicon source gas and a second silicon source gas, wherein a decomposition temperature of the first silicon source gas is lower than a decomposition temperature of the second silicon source gas.

5. The method of claim 4, wherein a decomposition temperature of the first silicon source gas is 350°C to 600°C, and
a decomposition temperature of the second silicon source gas is 600°C to 1000°C.

6. The method of claim 4, wherein the first silicon source gas and the second silicon source gas are introduced at a molar ratio of 1 : 0.2 to 1 : 6.

7. The method of claim 4, wherein the silicon source gas mixture and the hydrogen gas are introduced at a molar ratio of 1 : 0.5 to 1 : 10.

8. The method of claim 1, wherein a temperature of the reactor is 700°C to 1,000°C, and
has a temperature gradient such that a temperature at an upper end of the reactor is higher than a temperature at a lower end of the reactor.

9. The method of claim 1, wherein in the reactor, generation of silicon seeds and growth of silicon particles from the generated silicon seeds proceed simultaneously.

10. The method of claim 1, wherein in (S2) above, a reaction time in the reactor for the silicon source gas mixture to manufacture silicon microparticles is 5 minutes to 3 hours.

11. The method of claim 1, wherein a carrier gas is further introduced into the reactor.

12. An apparatus for manufacturing silicon microparticles, the apparatus comprising:
a raw material gas injection part;
a raw material gas mixing unit;
a thermal decomposition reactor;
a heating part surrounding the reactor; and
a gas discharge part,
wherein the thermal decomposition reactor has a turbulent flow region formed at an upper portion of the thermal decomposition reactor and a laminar flow region formed at a lower portion of the thermal decomposition reactor coexisting therein.

13. The apparatus of claim 12, wherein an internal structure for forming a turbulent flow region and a laminar flow region is included inside the thermal decomposition reactor,
a material of the internal structure has heat resistance to 700°C to 1000°C, and includes one or more selected from graphite, quartz, and ceramic.

14. The apparatus of claim 12, wherein a temperature of the thermal decomposition reactor is 700°C to 1,000°C, and
has a temperature gradient such that a temperature at an upper end of the thermal decomposition reactor is higher than a temperature at a lower end of the thermal decomposition reactor.

15. The apparatus of claim 12, wherein in a volume of the thermal decomposition reactor, a volume of the turbulent flow region : a volume of the laminar flow region is 1 : 9 to 9 : 1.

16. The apparatus of claim 12, wherein the silicon microparticles have a grain size of 40 nm or less, an average particle diameter (D₅₀) of 100 nm to 10 µm, and a sphericity of 80% or more.

17. Silicon microparticles manufactured according to the method of any one of claims 1 to 11.

18. The silicon microparticles of claim 17, wherein the silicon microparticles have an average grain size of 40 nm or less, an average particle diameter (D₅₀) of 100 nm to 10 µm, and a sphericity of 80% or more.
